# EUROPÄISCHE PATENTSCHRIFT

(11) **EP 0 960 778 B1**
(45) Veröffentlichungstag und Bekanntmachung des Hinweises auf die Patenterteilung: **05.11.2003**
(21) Anmeldenummer: 99110190.8
(22) Anmeldetag: 26.05.1999
(51) Int. Cl.: B60R 7/04

(54) **Abdeckung, insbesondere für Ablagen eines Kraftfahrzeugs**
Cover, in particular for a vehicle storage compartment
Couvercle, en particulier pour réceptacle de véhicule

(30) Priorität: 29.05.1998 DE 19824248
(43) Veröffentlichungstag der Anmeldung: 01.12.1999
(73) Patentinhaber: Lange, Carsten, 85778 Haimhausen (DE); Beier, Herbert, 85716 Unterschleissheim (DE)
(72) Erfinder: Lange, Carsten, 85778 Haimhausen (DE); Beier, Herbert, 85716 Unterschleissheim (DE)
(74) Vertreter: Winter, Brandl, Fürniss, Hübner, Röss, Kaiser, Polte Partnerschaft

(56) Entgegenhaltungen:
- DE-A- 4 010 241
- DE-C- 866 843
- FR-A- 2 722 828
- GB-A- 2 245 631
- US-A- 2 458 537
- US-A- 2 937 398

## Beschreibung

Die vorliegende Erfindung betrifft eine Abdeckung mit einer Mehrzahl von Flächenelementen nach dem Oberbegriff des Anspruches 1 sowie ein mit einer derartigen Abdeckung versehenes Innenausstattungsteil. Eine derartige Abdeckung ist aus der FR-A-2 722 828 bekannt.

Wenn ein Lager-, Stau- oder Aufbewahrungsraum bzw. seine Zugangs- oder Zugriffsöffnung öffen- und verschließbar gestaltet werden soll, stellt sich häufig das Problem nach der Ausgestaltung der hierzu verwendbaren Abdeckung. Ein Beispiel, bei welchem die gattungsgemäßen Abdeckungen anwendbar ist, sind Innenausstattungsteile für Fahrzeuge zur Aufnahme und/oder Aufbewahrung von Gegenständen. Derartige Innenausstattungsteile oder Ablagebehälter können in Fahrzeugen, an einer Vielzahl von Stellen im Innenraum angeordnet werden.

So ist es bekannt, zwischen den beiden Vordersitzen eines Personenkraftfahrzeuges einen Ablagebehälter anzuordnen. Waren diese Ablagebehälter früher einfache muldenförmige Aufnahmen, in welche die abzulegenden Gegenstände einfach hineingelegt wurden, so ist man in den vergangenen Jahren zunehmend dazu übergegangen, diese Ablagebehälter mit einer Abdeckung verschließbar zu gestalten. Dies erfolgt aus einer Mehrzahl von Gründen, unter anderem, um das Innere des Ablagebehälters bzw. sich darin befindliche Gegenstände vor Staub, Sonneneinstrahlung, unmittelbare Sichtbarkeit etc. zu schützen. Neben der Anordnung zwischen den beiden Vordersitzen ist es auch bekannt, Ablagebehälter in der Mittelkonsole, dem Armaturenbrett, den Türverkleidungen, dem Dachhimmel, in einer ausklappbaren Armlehne auf der hinteren Sitzbank, in der Hutablage etc. vorzusehen. Neben der Anordnung in Personenkraftfahrzeugen sind entsprechend ausgestaltete Ablagebehälter darüber hinaus auch bei Omnibussen, in Eisenbahnwägen, Flugzeugen oder dergleichen anzutreffen.

Wie bereits erläutert, ist es in manchen Fällen sogar notwendig, den Ablagebehälter mit einer Abdeckung zu versehen, mit welcher ein Zugriff und/oder Einblick in den Ablagebehälter unterbindbar ist.

So ist es beispielsweise bekannt, bei einem zwischen den Vordersitzen angeordneten Ablagebehälter diesen mit einem hochklappbaren Deckel zu versehen, wobei oft die Oberseite dieses Deckels gepolstert ist und als Armlehne benutzt werden kann.

Auch ist es aus der DE 4 010 241 A bekannt, bei sich beispielsweise zwischen den Vordersitzen eines Personenkraftfahrzeuges befindlichen Ablagebehältern eine in Längsrichtung des Behälters verschiebbare Abdeckung vorzusehen, welche aus einzelnen quer zur Längserstreckung verlaufenden untereinander verbundenen Lamellen besteht, welche in ihrer Gesamtheit die Abdeckung bilden und seitlich in Führungsnuten gehalten sind. Zum Öffnen der Abdeckung wird diese in Öffnungsrichtung geschoben, wobei die untereinander verbundenen Lamellen der Abdeckung entlang den Führungsnuten gleiten und in nicht sichtbarer Weise durch die Führungsnuten um 180° nach unten und dann unterhalb der Bodenfläche des Ablagebehälters nach vorne verlaufend geführt werden. Dieses Prinzip einer Abdeckung ist auch aus sogenannten Rolltürschränken bekannt.

Weiterhin ist aus der DE-PS 44 03 111 ein Ablagebehälter für Fahrzeuge bekannt, der durch eine Art Rollo abgedeckt werden kann. Das Rollo ist mit seinen Rändern seitlich in Führungsnuten geführt, wobei diese Nuten einerseits von dem Ausstattungsteil selbst und andererseits von einem Abdeckrahmen gebildet werden.

Bei der Ausbildung der Abdeckung nach Art eines aufklappbaren Deckels ist unter anderem nachteilig, daß der Ablagebehälter nicht ohne weiteres über einen längeren Zeitraum offengelassen werden kann, da dann der hochstehende Deckel entweder den Fahrer behindert und/oder beim Bremsen, Beschleunigen oder Kurvenfahren aus seiner geöffneten Stellung wieder zurück in die geschlossene Stellung klappt.

Bei einer verschiebbaren Abdeckung, welche aus einer Mehrzahl von untereinander verbundenen Lamellen aufgebaut ist, welche nach dem Rollschrankprinzip bogenförmig nach unten/hinten geführt werden, ergibt sich das Problem, daß aufgrund des notwendigen Aufnahmeraumes für die Abdeckung in der geöffneten Stellung zum Teil ganz erhebliche Restriktionen hinsichtlich der Einbaumöglichkeiten bestehen.

Bei dem Ablagebehälter für Fahrzeuge bzw. der Abdeckung hierfür gemäß der DE-PS 44 03 111 ist nachteilig, daß ein eigener Abdeckrahmen zur Kaschierung der seitlichen Führungen des Rollos erforderlich ist. Hierdurch erhöht sich zunächst der Platzbedarf aufgrund des zusätzlichen Bauteiles in Form des Abdeckrahmens. Auch wird durch den Platzbedarf für die Umlenkung des Rollos wiederum die Einsatzfähigkeit, das heißt Einbauvariabilität eingeschränkt. Weiterhin muß der Abdeckrahmen an den Ablagebehälter bzw. die seitlichen Führungen angepaßt werden, wodurch die Herstellungskosten und Montagekosten steigen. Schließlich entsteht durch den Abdeckrahmen eine vom optischen Eindruck her unerwünschte zusätzliche Fuge im Sichtbereich.

Der Erfindung liegt die Aufgabe zugrunde, eine Abdeckung nach dem Oberbegriff des Anspruches 1 so auszugestalten, daß mit geringem Platzbedarf, geringer Bauteilanzahl und damit niedrigen Herstellungskosten eine robuste, optisch ansprechende Möglichkeit geschaffen wird, beispielsweise Ablagebehälter für Fahrzeuge abzudecken.

Die Lösung dieser Aufgabe erfolgt durch die im Anspruch 1 definierte Abdeckung mit einer Mehrzahl von Flächenelementen.

Erfindungsgemäß ist jedes Flächenelement mit zumindest zwei, eine Schwenkachse definierenden, seitlich auskragenden Führungsvorsprüngen versehen, die gegenüber der die zwei benachbarten Flächenelemente verbindenden Gelenkverbindung versetzt sind. Durch diese Maßnahme wird beim Verschwenken des in Öffnungsrichtung vordersten Flächenelementes der Abdeckung ein Drehmoment auf die Gelenkverbindung übertragen, so daß auch das benachbarte Flächenelement in die Schwenkstellung gebracht wird und somit die Zick-Zack-Faltung selbsttätig erfolgt. D.h., die Verschwenkung der Flächenelemente erfolgt gesteuert über eine Krafteinleitung in Abhängigkeit von der auf die Abdeckung wirkenden Verschiebekraft, so daß ein gesteuertes Falten der Abdeckung möglich ist. Diese erfindungsgemäße Konstruktion ist daher im Gegensatz zum Stand der Technik gemäß der DE-PS 866 843 schwerkraftunabhängig und in jedweder Lage (horizontal, vertikal, schrägverlaufend) einsetzbar.

Zwar sind mit der CH 688 593 und der DE 3 801 586 Lösungen für das Verschließen von Gebäudeöffnungen bzw. Dächern bekannt, die in ihrer Geschlossenstellung eine ebenflächige Lage aller Flächenelemente zueinander vorsehen, jedoch sind für die Öffnungs- und Schließbewegung sowie für das Einleiten der zickzackartigen Faltung aufwendige technische Mittel, insbesondere zur Führung der Flächenelemente erforderlich, so daß die Verwendung dieser Abdeckungen im Gegensatz zu dem bei der vorliegenden Erfindung ermöglichten universellen Einsatz auf Sonderfälle wie beispielsweise Dächer beschränkt ist.

Durch die Maßnahme, an jeder Stirnseite eines Flächenelements jeweils zwei Führungsvorsprünge auszubilden, die in jeweils einer Führungsnut aufgenommen sind, kann jedes Flächenelement der Abdeckung in der Schließposition in einer Planlage gehalten werden, so daß eine flächige, ebene Abdeckung gebildet wird. Bei dieser Variante wird ein Führungsvorsprüngepaar mit kürzerer Axiallänge als das andere Paar von Führungsvorsprüngen ausgebildet, wobei die kürzen Führungsvorsprünge im Öffnungszustand aus der Führungsnut herausbewegt werden, so daß die Flächenelemente lediglich noch durch die längeren Führungsvorsprünge geführt sind.

Eine besonders kompakte Faltung erhält man, wenn die Flächenelemente einerseits über eine Doppelscharnierverbindung mit zwei 90°-Scharnieren und andererseits über eine einfachwirkende Scharnierverbindung mit einem 180°-Scharnier mit den benachbarten Flächenelement verbunden sind.

Dabei ist es besonders vorteilhaft, wenn die in der Führungsnut verbleibenden Führungsvorsprünge so in unmittelbarer Nähe der Doppelscharnierverbindung ausgebildet sind, so daß einerseits genügend Kraft zum Verschwenken auf das Scharnier übertragen werden kann, andererseits im Schwenkzustand die von den beiden 90°-Scharnieren begrenzte Fläche nicht übermäßig über die Führungsbahn in Blickrichtung hinausragt.

Bei Vorversuchen zeigt es sich, daß durch das Vorsehen eines Leerhubes eine ebene Schließstellung der Flächenelemente bei geschlossener Abdeckung gewährleistet ist und daß durch das Auflaufen des in Öffnungsrichtung vordersten Flächenelementes auf einen Anschlag nach Durchfahren des Leerhubes eine gezielte Faltung der Abdeckung problemlos einleitbar ist.

Die Qualität der Abdeckung läßt sich weiter verbessern, wenn dem in Öffnungsrichtung vordersten Flächenelement eine Zusatzauflage zugeordnet wird, auf der die kürzeren Führungsvorsprünge nur in der Schließstellung aufliegen. Durch das Durchfahren des Leerhubes werden die Führungsvorsprünge von der Zusatzauflage herunterbewegt, so das der Schwenkvorgang eingeleitet werden kann. D.h., die Zusatzauflage bewirkt, daß auch das vorderste, den Faltvorgang einleitende Flächenelement in der Schließstellung in der Abdeckstellung gehalten wird und nicht kippen kann.

Die Freigabe der kürzeren Führungsvorsprünge läßt sich beispielsweise dadurch bewirken, indem die Führungsnuten im Faltbereich eine in Axialrichtung verkürzte Auflagefläche haben, so daß die kürzeren Führungsvorsprünge nicht mehr abgestützt werden.

Die Verschwenkung läßt sich gezielt steuern, in dem von der Führungsnut eine axial innenliegende Führungsbahn abzweigt, entlang der die kürzeren Führungsvorsprünge während der Schwenkbewegung geführt sind. Vorteilhafter Weise wird die Abdeckung mit Verriegelungsmitteln versehen, um diese in der Öffnungs- und/oder Schließstellung festzulegen.

Bei einer Variante wird das in Öffnungsrichtung hinterste Flächenelement einstückig mit einem Griffteil ausgeführt, das bei geöffneter Abdeckung aufgrund der Verschwenkung des Flächenelementes nach oben hin vorsteht, so daß eine einfach zu betätigende Handhabe zur Verfügung gestellt ist. Eine derartige Variante läßt sich besonders vorteilhaft bei Getränkehaltern einsetzen. Die Festlegung des aufzunehmenden Gegenstandes, beispielsweise einer Getränkedose läßt sich verbessern, in dem zumindest eines der Flächenelemente an seiner Rückseite ein Stützelement trägt, das bei geöffneter- oder geschlossener Abdeckung den festzulegenden Gegenstand zumindest abschnittsweise umgreift.

Bevorzugt sind die Flächenelemente verformungsstabile Plattenbauteile, die Scharnierverbindungen sind Filmscharniere aus einem hinreichend flexiblen Material und die Plattenbauteile und die Filmscharniere sind bevorzugt einstückig miteinander verbunden. Hierdurch ergibt sich insbesondere in der Schließstellung der Abdeckung eine fugenoder spaltfreie Oberfläche der Abdeckung, ohne hierbei eine leichtgängige Abwinklung der einzelnen Flächenelemente zueinander zu behindern.

Um eine vollflächige Abdeckung zu gewährleisten werden die Gelenk- oder Scharnierverbindungen vorzugsweise über die gesamte Breite der Flächenelemente ausgebildet.

An dem sich in Schließrichtung der Abdeckung vordersten in die Zickzackstellung bewegbaren Flächenelement schließt sich bei einem Ausführungsbeispiel ein entlang der Führung im wesentlichen nur translatorisch bewegbares Flächenelement an. An diesem kann dann ein Griffteil zur leichten und ergonomischen Bewegung der Abdeckung, sowie Verriegelungsmittel zum Verriegeln der Abdeckung zumindest in der Schließstellung angeordnet werden.

Die Montage der erfindungsgemäßen Abdeckung ist besonders einfach, wenn vor der Zusatzauflage eine Montagenut mündet, über die die Abdeckung in die Führungsnut einführbar ist.

Sonstige vorteilhafte Weiterbildungen der Erfindung sind Gegenstand der weiteren Unteransprüche.

Im folgenden werden vorteilhafte Ausführungsbeispiele der Erfindung anhand schematischer Zeichnungen näher erläutert.

Es zeigen:
Fig. 1 eine perspektivische Gesamtansicht eines ersten Ausführungsbeispiels eines mit einer erfindungsgemäßen Abdeckung versehenen Ablagebehälters mit der Abdeckung in ihrer Schließstellung;
Fig. 2 eine Fig. 1 entsprechende Darstellung mit geöffneter Abdeckung;
Fig. 3 eine seitiche Schnittdarstellung durch den Ablagebehälter von Fig. 1 mit geschlossener Abdeckung;
Fig. 4 eine Fig. 3 entsprechende Darstellung mit vollständig geöffneter Abdeckung;
Fig. 5 eine Fig. 3 oder Fig. 4 entsprechende Darstellung mit der Abdeckung in einer Zwischenlage zwischen der Öffnungs- und der Schließstellung;
Fig. 6 einen vertikalen Schnitt durch den Ablagebehälter von Fig. 2 mit der Schnittebene senkrecht zu dessen Längserstreckung;
Fig. 7 eine perspektivische Teilansicht des Innenraums des Ablagebehälters mit entfernter Abdeckung;
Fig. 8 eine perspektivische Ansicht der Abdeckung in der Öffnungsstellung.
Fig. 9 eine seitliche Teilansicht der Abdeckung in ihrer Schließstellung;
Fig. 9A und 9B vergrößerte Ausschnitte der in Fig. 9 mit den Kreisen 9A und 9B veranschaulichten Scharnierelemente in deren abgewinkelten Zustand;
Fig. 10 eine Schnittdarstellung eines weiteren Ausführungsbeispiels der vorliegenden Erfindung;
Fig. 11 eine perspektivische Außenansicht der Ausführungsform der Figur 10 mit geöffneter Abdeckung;
Fig. 12 ein drittes Ausführungsbeispiel der vorliegenden Erfindung in einer seitlichen Schnittdarstellung mit geöffneter Abdeckung und eingestellter Getränkedose und
Fig. 13 das Ausführungsbeispiel aus Fig. 12 in der Draufsicht

In allen Schnittdarstellungen bleibt die Abdeckung jeweils ungeschnitten.

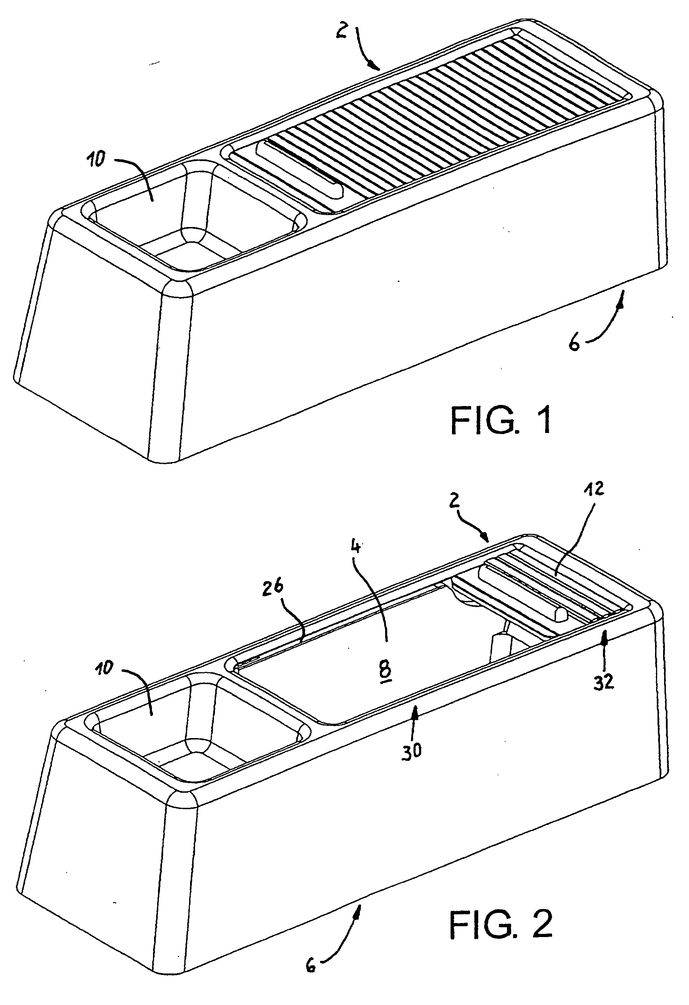

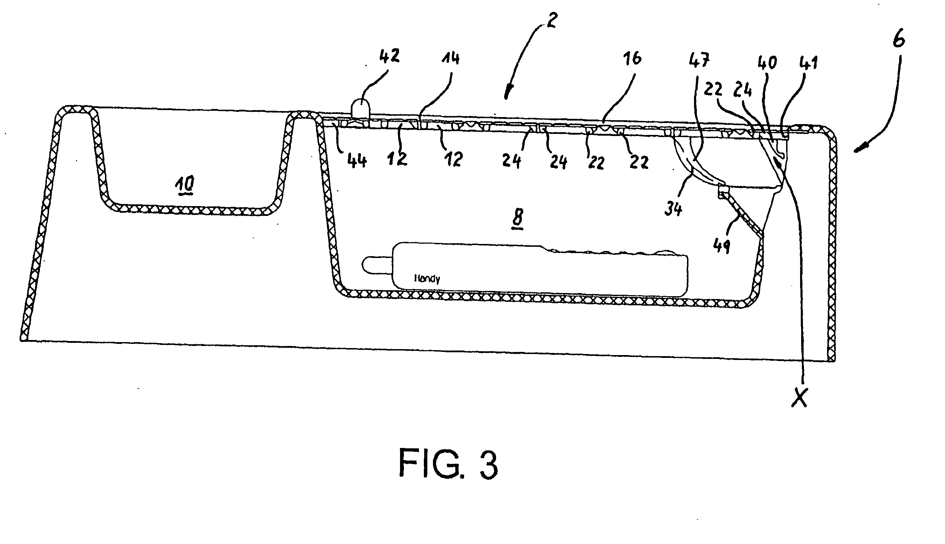

Eine in den Figuren 1 bis 9 mit 2 bezeichnete Abdeckung soll beispielsweise gemäß den Figuren 1 und 2 zur Abdeckung einer Öffnung 4 dienen, die in einem Innenausstattungsteil 6 ausgebildet ist und über die ein Aufnahme- oder Aufbewahrungsraum 8 (Fig. 3) zugänglich ist. Das Innenausstattungsteil 6 weist die in der Zeichnung dargestellte, im wesentlichen kastenförmige Formgebung auf und ist beispielsweise zur Anordnung zwischen den beiden Vordersitzen eines Personenkraftfahrzeuges ausgelegt.

Der von der Abdeckung 2 verschließbare bzw. von dieser freigebbare Aufnahmeraum 8 dient in bekannter Weise zur Aufnahme eines Mobiltelefons, von Fahrzeugpapieren, Audiokassetten, einer Brille, Taschentüchern, einem Schlüsselbund oder dergleichen.

In Schließrichtung der Abdeckung 2 vor dieser (links in Figur 1) ist in dem Innenausstattungsteil 6 noch eine weitere Ablageschale 10 zur Aufnahme von Münzen oder dergleichen vorgesehen.

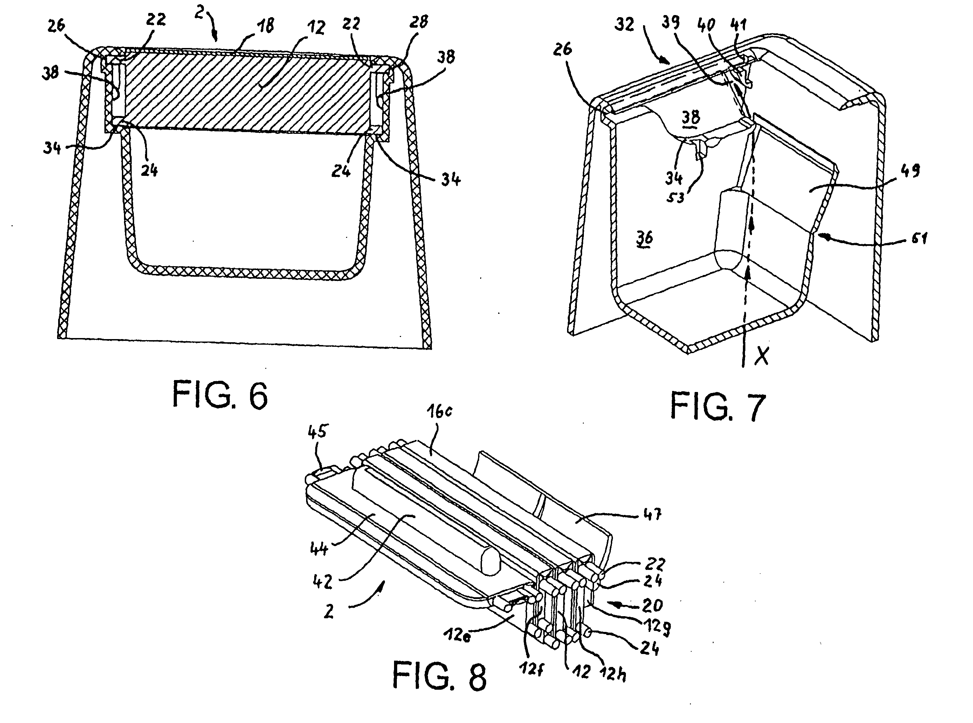

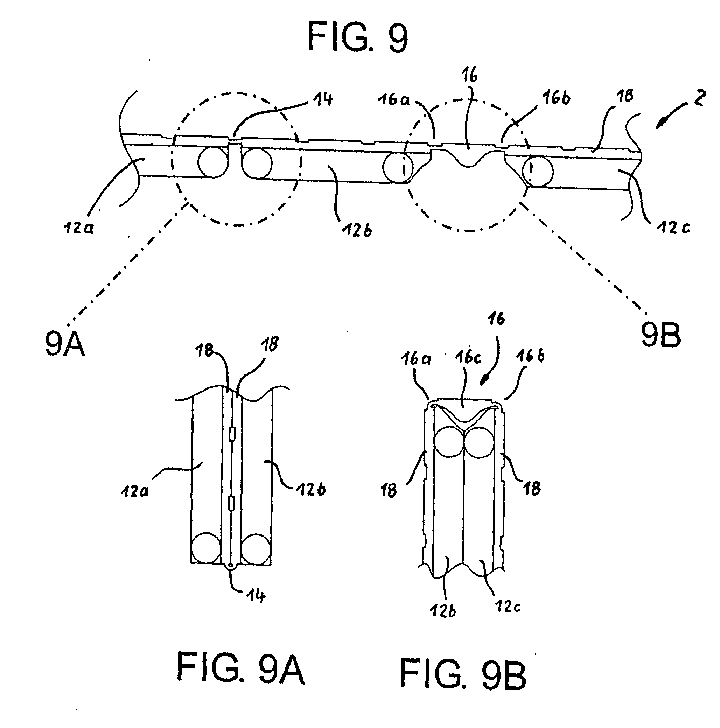

Wie sich insbesondere aus den Figuren 8 und 9 ergibt, hat die Abdeckung 2 eine Mehrzahl von Flächenelementen 12, welche sich quer zur Bewegungsrichtung der Abdeckung 2 erstrecken. Diese Flächenelemente 12 sind untereinander über Scharnierverbindungen 14 und 16 verbunden, wobei - wie nachfolgend noch näher erläutert werden wird - die Scharnierverbindung 14 als einfach wirkende Scharnierverbindung und die Scharnierverbindung 16 als doppelt wirkende Scharnierverbindung zu betrachten ist. Unter "einfach wirkend" sei verstanden, daß das Scharnierelement der Scharnierverbindung 14 eine Schwenkung um 180° in einem Zug durchführt und unter "doppelt wirkend" sei verstanden, daß die Scharnierverbindung 16 eine Schwenkung um 180° durch Einzelschwenks zweier Scharnierelemente jeweils um 90° durchführt.

Die Figuren 9, 9A, 9B zeigen Detaildarstellung der Scharnierverbindungen 14, 16, über die die Flächenelemente 12 miteinander verbunden sind. Die Scharnierverbindungen 14, 16 sind beim gezeigten Ausführungsbeispiel im Spritzgießverfahren als Filmscharniere einstückig mit den Flächenelementen ausgebildet. Diese haben eine Tragstruktur, auf die im Zwei-Komponenten-Spritzgießverfahren eine Weichkomponente aufgebracht wird, die zum einen die Sichtfläche der Flächenelemente bildet und zum anderen genügend Elastizität aufweist, um den Anforderungen an ein Filmscharnier zu entsprechen.

Die einfachwirkende Scharnierverbindung 14 hat ein einziges Filmscharnier, über das sich die beiden Flächenelemente (12a, 12b) um 180° zueinander verschwenken lassen, so daß die durch die Weichkomponente gebildeten Sichtflächen aneinander liegen (Figur 9A).

Die doppeltwirkende Scharnierverbindung 16 hat zwei als Filmscharniere ausgebildete Scharnierabschnitte, die jeweils eine 90°-Verschwenkung mit Bezug zu einem die beiden Scharnierabschnitte 16a, 16b verbindenden Mittelteil 16c ermöglichen. Diese Mittelteil 16c verjüngt sich hin zu den Scharnierabschnitten 16a, 16b, so daß die gewünschte 90°-Verschenkung kollisionsfrei durchführbar ist. Wie aus Figur 9B hervorgeht, lassen sich über die Scharnierverbindung 16 die beiden Flächenelemente 12b und 12c um jeweils 90° mit Bezug zum Mittelteil 16c verschwenken, so daß die von der Sichtfläche abgewandten Großflächen der Flächenelemente 12b, 12c in der Schwenkposition aneinander liegen.

Wie insbesondere aus der Figur 9 entnehmbar ist, sind die beiden Scharnierverbindungen 14, 16 im Bereich der in Figur 9 obenliegenden Sichtflächen ausgebildet, so daß sowohl im Öffnungszustand als auch im Schließzustand eine möglichst glattflächige Oberfläche erhalten wird, da die Filmscharniere etwa in der Ebene der Sichtflächen verlaufen.

Wie den Darstellungen gemäß Figur 8 und 9B entnehmbar ist, wird die Sichtfläche der Abdeckung 2 in geöffnetem Zustand (Figur 8) im wesentlichen durch die Mittelteile 16c der doppelwirkenden Scharnierverbindungen 16 gebildet, die über die ebenfalls sichtbaren Scharnierabschnitte 16a, 16b mit den zugeordneten Flächenelementen 12 verbunden sind, d.h., auch in der Öffnungsstellung wird durch die erfindungsgemäße Zick-Zack-Faltung eine im wesentlichen ebene, glattflächige Sichtfläche erhalten.

Jedes Flächenelement 12 ist gemäß beispielsweise Fig. 8 mit einer Mehrzahl von Führungsvorsprüngen 20 versehen. Hierbei haben die Führungsvorsprünge 20 unterschiedliche axiale Längen, das heißt, es sind Führungsvorsprünge 22, sowie Führungsvorsprünge 24 mit unterschiedlicher axialer Erstreckung vorhanden. Der Querschnitt der längeren Führungsvorsprünge 24 ist etwa kreisförmig ausgebildet, während die innere, den längeren Führungsvorsprüngen 24 zuweisende Fläche der kürzeren Führungsvorsprünge 22 angeschrägt ist, um ein Einführen der Abdeckung in der weiter unten beschriebenen Weise kollisionsfrei zu ermöglichen.

Gemäß Fig. 3 ist jedes Flächenelement 12 mit insgesamt vier Führungsvorsprüngen 20 versehen, nämlich einem koaxial zueinander angeordneten Paar von langen Führungsvorsprüngen 22 und einem koaxial zueinander angeordneten Paar von kurzen Führungsvorsprüngen 24. Die Anordung der Führungsvorsprünge 20 an den jeweiligen Flächenelementen 12 ist hierbei derart, daß die Führungsvorsprünge 20 jeweils in geringem Abstand zu den Scharnierverbindungen 14 und 16 angeordnet sind, wobei gemäß Fig. 5 die kurzen Führungsvorsprünge 24 jeweils beidseitig benachbart zu den einfach wirkenden Scharnierverbindungen 14 und die langen Führungsvorsprünge 22 jeweils beidseitig benachbart zu den doppelt wirkenden Scharnierverbindungen 16 angeordnet sind. Der Grund für diese spezielle Anordnung der Führungsvorsprünge 20 wird nachfolgend noch erläutert.

Sowohl die langen Führungsvorsprünge 22 als auch die kurzen Führungsvorsprünge 24 sind in der gestreckten Lage oder Schließstellung der Abdeckung 2 in zwei zueinander parallelen seitlichen Führungsnuten 26 und 28 (vgl. Fig. 2 und 6) geführt, wobei sich jede Führungsnut 26 oder 28 an einem Seitenrand der Öffnung 4 in deren Längsrichtung erstreckt. In der gestreckten Stellung oder Schließstellung der Abdeckung 2 gemäß Fig. 1 oder 3 ist somit jedes Flächenelement 12 durch insgesamt vier Führungsvorsprünge 20 in den Führungsnuten 26 und 28 gehalten, so daß die Flächenelemente 12 der Abdeckung 2 in einer Horizontalebene (Ansicht nach Figur 3) angeordnet sind.

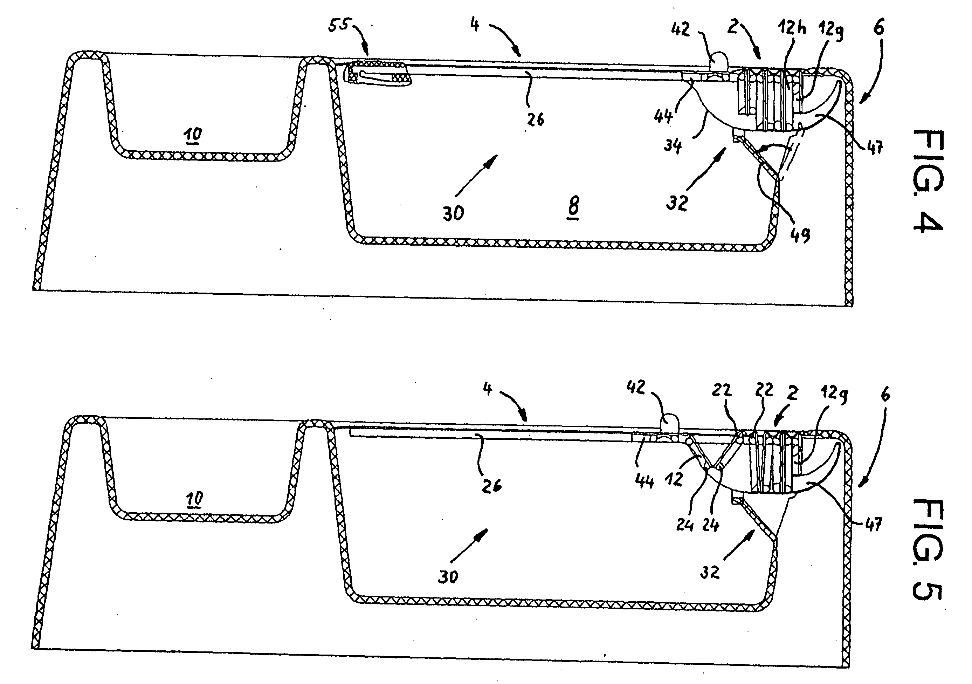

Wie aus den Figuren 1 bis 5 hervorgeht, läßt sich die gesamte Längserstreckung der Öffnung 4 im wesentlichen in einen Öffnungsbereich 30 und einen Faltbereich 32 unterteilen, wobei der Öffnungsbereich 30 gegenüber dem Faltbereich 32 wesentlich länger ist. Zur Freigabe des Öffnungsbereiches 30 wird die Abdeckung 2 aus der Stellung gemäß den Figuren 1 oder 3 in Richtung Faltbereich 32 bewegt, wobei sich die einzelnen Flächenelemente 12 gemäß den Figuren 4 und 5 im Faltbereich 32 zickzackartig falten und aneinanderlegen.

Zur Bewegung der Abdeckung 2 von der Schließstellung gemäß Fig. 3 in die geöffnete Stellung gemäß Fig. 4 und wieder zurück wird ein Griffteil 42 ergriffen, das an einem zusätzlichen Flächenelement 44 ausgebildet ist, das sich an das in der Schließrichtung der Abdeckung 2 vorderste Flächenelement 12 e anschließt und welches entlang der Füh-/rungsnuten 26 und 28 im wesentlichen nur translatorisch bewegbar ist. Darüber hinaus ist dieses zusätzliche Flächenelement 44 mit vier langen Führungsvorsprüngen 22 versehen und somit nur entlang den Führungsnuten 26 und 28 verschiebbar. Die beiden zum zusätzlichen Flächenelement 44 benachbarten Flächenelemente 12e, 12f und das in Öffnungsrichtung gesehene vorderste Flächenelement 12g haben geringere Breiten als die mittleren Flächenelemente 12 der Abdeckung 2. Prinzipiell könnten jedoch auch alle Flächenelemente 12a, ... mit der gleichen Breite ausgeführt werden. Die sich an das zusätzliche Flächenelement 44 anschließenden Flächenelemente 12, 12h haben jeweils ein Paar von kurzen Führungsvorsprüngen 24 und langen Führungsvorsprüngen 22. Die Ausbildung der Filmscharniere für die Gelenkverbindungen 14, 16 wird optisch kaschiert, in dem auf der Sichtfläche der Abdeckung 1 regelmäßig beabtandete Vertiefungen eingeprägt sind, deren Oberflächenstruktur derjenigen der Filmscharniere entspricht.

Wie insbesondere aus den Figuren 6 und 7 entnehmbar ist, ist an jeder Innenwandung 36, in der die Führungsnuten 26 bzw. 28 ausgebildet sind im Faltbereich 32 jeweils ein zurückspringender Wandabschnitt 38 ausgeformt, so daß ein innenliegender Teil der Auflagelfäche der Führungsnuten 26, 28 freigeschnitten wird. Durch diesen zurückspringenden Wandabschnitt 38 wird eine sich in der Darstellung nach Figur 7 nach unten hin erstreckende Führungsbahn 34 ausgebildet. Die Tiefe der zurückspringenden Wandabschnittes 38 wird gemäß Figur 6 so gewählt, daß die längeren Führungsvorsprünge 28 noch auf dem verbleibenden Teil der Führungsnuten 26, 28 aufliegen, während die kürzeren Führungsvorsprünge 24 auf der Führungsbahn 34 abgestützt werden können.

Gemäß Figur 7 ist in Öffnungsrichtung gesehen nach dem Wandabschnitt 38 eine Montagenut 39 ausgebildet, die sich bis zum Boden der Führungsnuten 26, 28 erstrecken. Im Anschluß an diese Montagenut 39 ist eine Zusatzauflage 40 ausgebildet, die die gleiche Breite wie die Führungsnuten 26, 28 im Öffnungsbereich 30 aufweist. In Öffnungsrichtung gesehen nach der Zusatzauflage 40 sind die Führungsnuten 26, 28 wieder ähnlich wie beim Wandabschnitt 38 zurückgestuft, so daß lediglich die längeren Führungsvorsprünge 22 abgestützt werden. Am in Figur 7 sichtbaren Ende der Führungsnuten 26, 28 ist ein Anschlag 41 ausgebildet, auf den die längeren Führungsvorsprünge 22 des Flächenelementes 12g beim Öffnen auflaufen.

Da durch die Montagenut 39 die Führungsnuten 26, 28 vollständig freigeschnitten sind, läßt sich die Abdeckung 2 bei der Montage in Pfeilrichtung X (siehe Figuren 3 und 7) von unten her in den von der Außenwandung des Innenausstattungsteils 6 definierten Raum einführen und mit den Führungsvorsprüngen 22, 24 in die Führungsnuten 26, 28 einsetzen. Die Abdeckung 2 wird dabei mit Hilfe des Griffteils 42 in die in Figur 3 dargestellte Schließposition gezogen.

Durch kurzes Überdrücken bzw. Stauchen der Abdeckung 2 nach vorne, d.h. in Schließstellung, leitet sich schließlich das letzte Paar von Führungsvorsprüngen 24 des Flächenelements 12g in die Führungsnuten 26, 28 gegen die Unterseite der Zusatzauflage 40, siehe insbesondere Figur 3. Durch das Rückfedern der aufgehaltenen Vorspannung beim Stauchen der Abdeckung 2 kommen sodann die kürzeren Vorsprünge 24 des in Öffnungsrichtung ersten Flächenelementes 12g auf der Zusatzauflage 40 zu liegen. In dieser Schließposition befinden sich die längere Führungsvorsprünge 22 noch im Abstand zum Anschlag 41.

Wie desweiteren Figur 8 entnehmbar ist, ist zwischen den beiden gleich langen Führungsvorsprüngen 22 des zusätzlichen Flächenelementes 44 eine Schleiflippe 45 als Weichkomponente ausgebildet, die während der Öffnungs- oder Schließbewegung entlang den Führungsnuten 26, 28 gleitet und aufgrund der Reibung ein hochwertiges Bediengefühl vermittelt. Diese Schleiflippe 45 wirkt desweiteren als Brems-/Dämpfungselement, so daß die Abdeckung 2 in der gewünschten Position verbleibt. Die Betätigungskraft für die Abdeckung 2 läßt sich auf einfacher Weise durch Veränderung der Schleiflippe 45 variieren.

Wie insbesondere aus den Figuren 3 und 8 entnehmbar ist, trägt das zum Flächenelement 12g benachbarte Flächenelement 12h ein sich in der Darstellung nach Figur 3 haifischflossenartig nach unten erstreckendes Wandelement 47, über das in Zusammenwirken mit einer Rückwand 49 der Innenwand 36 der Faltbereich 32 vom Öffnungsbereich 30 getrennt ist. Dadurch wird ausgeschlossen, daß kleinere Gegenstände aus dem Aufbewahrungsraum 8 in den Faltbereich 32 gelangen und somit die Abdeckung 2 blockieren können. Die Krümmung des Wandelements 47 ist derart gewählt, daß es in der Faltstellung das kürzere Flächenelement 12g zumindest abschnittsweise umgreift, d.h., dieses Flächenelement 12g ist in der Faltstellung (Figur 8) in den Bereich zwischen dem Flächenelement 12h und dem Wandelement 47 eingeklappt.

Der vorrichtungstechnische Aufwand zur Herstellung des Innenausstattungsteils 6 läßt sich verringern, in dem die Rückwandung 49 über ein Filmscharnier 51 mit der Innenwand 36 verbunden ist. Beim Entformen des Innenausstattungsteils 6 nimmt die Rückwandung 49 dann die in Figur 7 dargestellte Position ein, so daß keinerlei Schieber zur Ausbildung der Rückwandung 49 erforderlich sind. Bei der Montage wird diese Rückwandung 49 dann in die in Figur 3 dargestellte Position gebracht, wobei zwei seitliche Rastvorsprünge in eine Aufnahmenut 53 einschnappen, die in der Führungsbahn 34 mündet.

Die Geometrie der Führungsnuten 26, 28, der Abstände der Führungsvorsprünge 22, 24 und der Breite der Führungsbahn 34 sowie der Zusatzauflage ist so gewählt, daß in der Schließstellung sämtliche Führungsvorsprünge 22, 24 aufliegen, so daß eine ebene, im wesentlichen glattflächige Abdeckung gewährleistet ist.

Zum Öffnen der Abdeckung 2 wird diese über das Griffteil 42 in der Darstellung nach Figur 3 nach rechts geschoben.

Das in Öffnungsrichtung vorderste Flächenelement 12g wird zunächst gemeinsam mit den übrigen Flächenelementen nur translatorisch durch die Schubkraft am Griffteil 42 bewegt, bis das Paar kurze Führungsvorsprünge 24 dieses Flächenelements 12g seine Zusatzauflagen 40 verläßt und das Paar lange Führungsvorsprünge 22 am Ende der Führungsnuten 26, 28 zum Anschlag 41 gelangt.

Beim weiteren Öffnen erfolgt nun das Einleiten der Zickzack-Faltung durch das Schwenken dieses Flächenelements 12g infolge des Drehmoments, welches nun aus dem Produkt von Schubkraft am Griffteil 42 des zusätzlichen Flächenelements 44 und dem dazu senkrechten Abstand der Scharnierverbindung 16 von der Drehachse des letzten Flächenelements 12g entsteht.

Über das doppeltwirkende Scharnier 16 wird sodann durch die beschriebene Schwenkbewegung eine Zugkraft auf das jeweils folgende Flächenelement 12h übertragen. Dadurch werden die betroffenen kurzen Führungsvorsprünge 24 in die abzweigende Führungsbahn 34 geleitet, so daß sich die Zickzack-Faltung unabhängig von Schwerkraft oder Einbaulage der Abdeckung in mechanisch vorbestimmter Weise für jedes nachgeschobene Flächenelement 12 vollzieht.

Zum Überführen der Abdeckung 2 in die Schließstellung wird wieder das Griffteil 42 ergriffen und beispielsweise in Fig. 4 nach links bewegt, wodurch die einzelnen Flächenelemente 12 nacheinander aus der Zickzack-Stellung wieder in die Streckstellung überführt werden, wobei gleichzeitig die kurzen Führungsvorsprünge 22 entlang den Führungsbahnen 34 nach oben wieder in die Führungsnuten 26 und 28 geführt werden und dann nur mehr eine reine Translationsbewegung ausführen können. Sobald die kurzen Führungsvorsprünge 24 eines Flächenelementes 12 zusammen mit den sich bereits dort befindlichen langen Führungsvorsprüngen 22 in den Führungsnuten 26 und 28 aufgenommen sind, kann das betreffende Flächenelement 12 mit Bezug zu einem oder beiden benachbarten Flächenelementen 12 keine Schwenk-, Kipp- oder Verdrehbewegung mehr auszuführen. Der Schließvorgang ist abgeschlossen, wenn die kürzeren Führungsvorsprünge 24 des vordersten Flächenelements 12g auf den Zusatzauflagen 40 liegen und das zusätzliche Flächenelement 44 gegen einen Schließanschlag läuft. Die Schließstellung kann durch einen Feder- /oder Schnappmechanismus 55 (Figur 4) definiert werden, der im Bereich der Führungsnuten 24, 26 ausgebildet und der in Eingriff mit den Führungsvorsprüngen 22 bringbar ist.

Falls gewünscht, kann im Bereich des zusätzlichen Flächenelementes 44 auch ein mit einem Schlüssel absperrbares Schloß, ein Zahlenkombinationsschloß oder dergleichen angeordnet werden. Insbesondere bei einem Cabriolet empfielt sich die Integration eines Verschlusses in die Zentralverriegelung des Fahrzeuges.

Wie aus den Figuren 2 bis 5 hervorgeht, ragt die Oberkante der Abdeckung 2 im geöffneten Zustand nicht notwendigerweise über die von der Oberkante der Öffnung 4 definierte Ebene hinaus, da der Faltungsvorgang aufgrund der außer Eingriff gelangenden kurzen Führungsvorsprünge 24 im wesentlichen nach unten in den Aufnahmeraum 8 des Innenausstattungsteils 6 hinein erfolgt.

Weiterhin ist etwa gemäß Fig. 4 der von den in Zickzackstellung aneinander liegenden Flächenelementen 12 eingenommene Faltbereich 32 gegenüber dem Öffnungsbereich 30 sehr kurz, so daß im geöffneten Zustand der Abdeckung 2 ein weitestgehend ungehinderter Zugriff in den Aufnahmeraum 8 möglich ist.

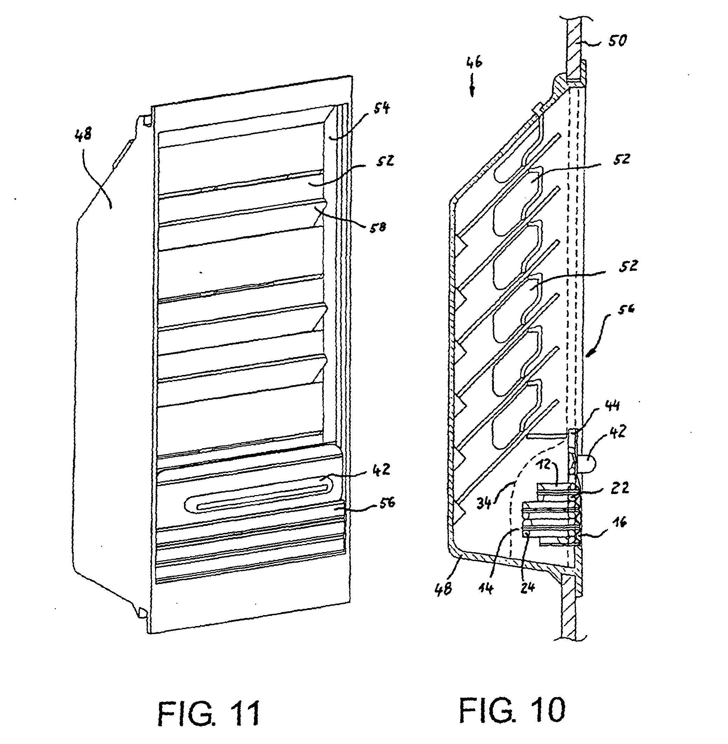

Bei dem in den Figuren 10, 11 dargestellten Ausführungsbeispiel ist ein Innenausstattungsteil 46 vorgesehen, welches beispielsweise im Bereich der Türverkleidung eingebaut werden kann und zur Aufnahme von Karten dient, beispielsweise einer Fahrzeugversicherungskarte, Werkstattkundenkarte, Parkkarte, Autoclubkarte, Telefonkarte oder dergleichen. Das Ausstattungsteil 46 weist einen Ausstattungskörper 48 auf, der beispielsweise in vertikaler Lage in eine Türverkleidung 50 eingebaut ist. Dieser Körper 48 dient zur Aufnahme der Karten 58 in einer Mehrzahl von Fächern 52. Zusätzlich hierzu können in den einzelnen Fächern 52 noch beispielsweise seitlich wirkende Halteklemmen oder - federn vorgesehen sein, mit welchen die jeweiligen Karten 58 zusätzlich lagefixiert werden können.

Eine Öffnung 54 des Körpers 48 ist von einer Abdeckung 56 verschließbar oder freigebbar, wobei diese Abdeckung 56 im wesentlichen den gleichen Aufbau wie die Abdeckung 2 gemäß der Ausführungsform der Figuren 1 bis 9 hat; auf eine nochmalige detaillierte Erläuterung des Aufbaus der Abdeckung kann daher verzichtet werden.

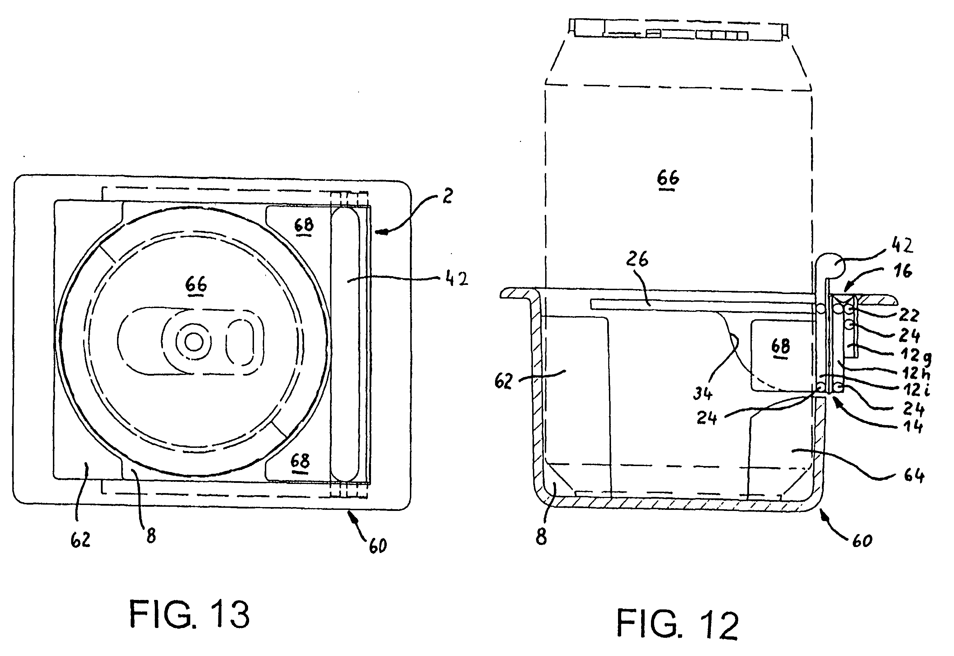

In den Figuren 12 und 13 ist ein Ausführungsbeispiel gezeigt, bei dem die Abdeckung 2 dazu verwendet wird, um einen Getränkehalter 60 zu verschliessen. Dieser kann beispielsweise in der Mittelkonsole oder in den Armlehnen eines Kraftfahrzeuges aufgenommen sein.

Das Gehäuse des Getränkehalters 60 hat in der Darstellung nach Figur 12 einen etwa rechteckförmigen Querschnitt, wobei im Aufbewahrungsraum 8 Formteile 62, 64 befestigt oder angeformt sind, die die Außenkontur einer gestrichelt angedeuteten Getränkedose 66 umgreifen, so daß diese formschlüssig aufgenommen ist.

Aufgrund der geringeren Abmessungen des Getränkehalters 60 ist die Abdeckung 2 mit wesentlich geringerer Länge als diejenige der vorbeschriebenen Ausführungsbeispiel ausgeführt. Beim dargestellten Ausführungsbeispiel hat die Abdeckung 2 beispielsweise ein in Öffnungsrichtung liegendes, schmaleres Flächenelement 12g mit einem Paar kürzeren und längeren Führungsvorsprüngen 22, 24, das über ein doppeltwirkendes Scharnier 16 mit einem Flächenelement 12h größerer Breite verbunden ist. An dieses ist über eine einfachwirkende Scharnierverbindung 14 ein Flächenelement 12i angelenkt, das einstückig mit einem Griffteil 42 ausgeführt ist. Die beiden Flächenelemente 12h, 12i sind jeweils über zwei Paare von Führungsvorsprüngen in den Führungsnuten 26, 28 geführt, die in der gleichen Weise wie beim vorbeschriebenen Ausführungsbeispiel in der Seitenwandung des Getränkehalters 60 ausgebildet sind. D.h., in der dargestellten Öffnungsstellung sind die kürzeren Führungsvorsprünge 24 entlang der Führungsbahn 34 aus dem Eingriffsbereich der Nuten 24 herausgeführt, so daß die Flächenelemente 12 in die dargestellte Faltstellung gebracht werden. Dabei verschwenkt das einstückig mit dem Flächenelement 12i verbundene Griffteil 42 nach oben aus der Öffnungsebene des Getränkehalters 60 heraus, so daß eine gut greifbare Handhabe zum Schließen des Getränkehalters 60 zur Verfügung gestellt wird.

Wie insbesondere Figur 13 entnehmbar ist, trägt das Flächenelement 12i an seiner der Sichtfläche gegenüberliegenden Innenfläche ein Stützelement 68, das an die Außenkontur der aufzunehmenden Getränkedose 66 angepaßt ist und somit in der Öffnungsstellung die Formteile 62, 64 ergänzt. Bei geschlossener Abdeckung 2 ragt das Stützelement 68 von oben (Ansicht nach Figur 13) in den Aufnahmeraum 8 hinein.

Zur besseren Anpassung können dem durch Haltprismen gebildeten Stützelement 68 beispielsweise federbelastete Haltefinger zur Anpassung an unterschiedliche Durchmesser der Getränktedose 66 zugeordnet werden. Vorzugsweise wird der Getränkehalter leicht ausbaubar und spülmaschinenfest ausgestaltet.

Hinsichtlich des weiteren konstruktiven Aufbaus der Abdeckung und der dafür vorgesehenen Führungen sei auf die Ausführungen zu den vorbeschriebenen Ausführungsbeispielen verwiesen.

Besonders hervorzuheben für den Fahrzeugbau ist weiterhin die Möglichkeit zur Gewichtsreduzierung gegenüber herkömmlich abgedeckten Ausstattungsteilen. Zum einen werden weniger Bauteile benötigt und zum anderen erleichtert die kompakte Gestaltung der Führungen eine stabile Auslegung beispielsweise der Mittelkonsole ohne Ergreifung von gewichtserhöhenden Aussteifungen.

Die Abdeckung 2 bzw. 56 kann selbstverständlich auch in einer schräg oder vertikal verlaufenden Ebene verschiebbar sein oder segmentweise möglichen Wölbungen von Oberflächen folgen, das heißt, die Führungsnuten 26 und 28 müssen nicht über ihre gesamte Länge hinweg völlig geradlinig verlaufen.

Bekannte Abdeckungen, beispielsweise für Ablagen in Kraftfahrzeugen, weisen die Nachteile aus, daß sie mehrere Bauteile zusätzlich zum Ablagebehältnis erfordern und/oder zusätzlichen, deutlich über die Abmessungen des Ablagebehälters hinausgehenden Aufnahmeraum für das Öffnen benötigen und/oder nicht einsetzbar sind, wenn in Tiefen- oder Breitenrichtung gesehen nur beschränkter Einbauraum zur Verfügung steht und/oder sich die Abdeckung bei Gebrauch ungenügend robust verhält.

Die erfindungsgemäße Abdeckung (2) soll diese Nachteile gesamthaft beseitigen und sich darüber hinaus durch geringe Stückkosten, geringes Bauteilgewicht und ansprechende Optik auszeichnen.

Dies wird erreicht durch eine Abdeckung (2) mit einer Vielzahl von Flächenelementen (12), die verschiebbar in einer Führung (26) geführt, von einer Schließstellung in eine Öffnungsstellung bringbar sind, wobei die Flächenelemente (12) in der Öffnungsstellung durch erfindungsgemäß gestaltete Führungen (26, 28) zickzackartig zueinander angeordnet sind, ohne dabei notwendig über die Oberkante des Ablagebehälters (6) hinauszuragen. Zur Vermeidung ungewollter Welligkeit der Abdeckung (2) in Geschlossenstellung ist jedes Flächenelement (12) durch vier Führungsvorsprünge 22, 24 geführt.

Die erfindungsgemäße Abdeckung (2) eignet sich zur Abdeckung einer Vielzahl von waagerecht, senkrecht oder geneigt verlaufender Öffnungen, insbesondere im Innenraum von Kraftfahrzeugen, die ebenflächig ebgedeckt werden sollen.

## Patentansprüche

1. Abdeckung für ein Behältnis mit einer Mehrzahl von gelenkig miteinander verbundenen Flächenelementen (12), die verschiebbar in einer Führung (26, 28) geführt von einer Schließstellung in eine Öffnungsstellung bringbar sind, wobei die Führung (26, 28) derart ausgebildet ist, daß die Flächenelemente (12) in der Öffnungsstellung etwa zickzackartig zueinander angeordnet sind, **dadurch gekennzeichnet, daß** jedes Flächenelement (12) zumindest zwei eine Schwenkachse definierende Führungsvorsprünge (22) haben, deren Achse gegenüber einer Gelenkverbindung (16) mit dem benachbarten Flächenelement (12) versetzt ist und dass zwei weitere koaxial zueinander angeordneten Führungsvorsprünge (24) eine geringere Länge als die beiden anderen Führungsvorsprünge (22) aufweisen, und in der Öffnungsstellung in einem Faltbereich (32) außer Eingriff mit der Führung (26, 28) gelangen.

2. Abdeckung nach Anspruch 1, **dadurch gekennzeichnet, daß** den vier Führungsvorsprüngen (22, 24) einander gegenüberliegende Führungsnuten (26, 28) zugeordnet sind, die an zwei Seitenwandungen (36) der Ablage ausgebildet sind.

3. Abdeckung nach Anspruch 1, **dadurch gekennzeichnet, daß** das Flächenelement (12) einerseits über eine doppeltwirkende Scharnierverbindung (16) und andererseits vorzugsweise über eine einfachwirkende Scharnierverbindung (14) mit einem jeweils benachbarten Flächenelement (12) verbunden ist, und daß jeweils zwei koaxial zueinander angeordnete Führungsvorsprünge (22) in der Nähe zur doppelwirkenden Scharnierverbindung (16) ausgebildet sind.

4. Abdeckung nach einem der vorhergehenden Ansprüche, **dadurch gekennzeichnet, daß** dem in Öffnungsrichtung vorne liegenden Flächenelement (12g) ein Anschlag (41) zugeordnet ist, auf den dieses beim Öffnen nach einem Leerhub aufläuft.

5. Abdeckung nach Anspruch 1, **gekennzeichnet durch** eine Zusatzauflage (40) im Faltbereich (32), über die die kurzen Führungsvorsprünge (24) des in Öffnungsrichtung vordersten Flächenelementes (12g) im Schließzustand abgestützt sind.

6. Abdeckung nach Anspruch 5, **gekennzeichnet durch** eine Montagenut (39), die in Schließrichtung gesehen im Bereich der Zusatzauflage (40) in der Führungsnut (26, 28) mündet.

7. Abdeckung nach einem der vorhergehenden Ansprüche, **dadurch gekennzeichnet, daß** sich Gelenk- oder Scharnierverbindungen (14, 16) über die Breite der Flächenelemente (12) erstrecken.

8. Abdeckung nach einem der vorhergehenden Ansprüche, **dadurch gekennzeichnet, daß** die Führungsnuten (26, 28) im Faltbereich (32) eine verkürzte Auflagefläche haben, so daß die kürzeren Führungsvorsprünge (24) nicht abgestützt werden.

9. Abdeckung nach Anspruch 8, **dadurch gekennzeichnet, daß** sich jede Führungsnut (26, 28) im Faltbereich (32) verzweigt, wobei eine sich in Schwenkrichtung der Flächenelemente (12) erstreckende Führungsbahn (34) abzweigt, entlang der die kürzeren Führungsvorsprünge (24) während der Schwenkbewegung geführt sind.

10. Abdeckung nach einem der vorhergehenden Ansprüche, **dadurch gekennzeichnet, daß** ein Flächenelement Verriegelungsmittel (45) zum Arretieren der Abdeckung (2) zumindest in der Öffnungsstellung hat.

11. Abdeckung nach einem der vorhergehenden Ansprüche, **dadurch gekennzeichnet, daß** das in Öffnungsrichtung hinterste Flächenelement (12i) einstückig mit einem Griffteil (42) versehen ist, das in der Öffnungsstellung aus der Ebene der Abdeckung (2) heraus schwenkbar ist.

12. Abdeckung nach einem der vorhergehenden Ansprüche, **dadurch gekennzeichnet, daß** ein Flächenelement (12i) an seiner einem Aufbewahrungsraum (8) zugewandten Großfläche ein Stützelement (64) trägt, über das ein im Behälter aufgenommener Gegenstand, beispielsweise eine Getränkedose (66) abschnittsweise umgreifbar ist.

13. Innenausstattungsteil (6; 46) eines Fahrzeuges zur Aufnahme und/oder Aufbewahrung von Gegenständen, mit einem einen Aufbewahrungsraum (8) enthaltenden Gehäuse oder Körper (48) und einer Öffnung (4; 54) für den Aufbewahrungsraum (8), **gekennzeichnet, durch** eine Abdeckung (2; 56) nach einem oder mehreren der vorhergehenden Ansprüche zum Verschließen oder Freigeben der öffnung (4 ; 54).

## Claims

1. Cover for a receptacle, including a plurality of planar members (12) which are connected to each other in an articulated manner and may be taken from a closing position into an opened position while translatably guided in guide means (26, 28), said guide means (26, 28) being formed such that said planar members (12) in the opened position have an approximately zig-zag arrangement with respect to each other, **characterised in that** said planar members (12) comprise at least two guide projections (22) defining an axis of rotation, whose axis is staggered relative to a joint connection (16) with the neighboring planar member (12), and that two further guide projections (24) arranged coaxially with respect to each other have a smaller length than the other two guide projections (22), and in the opened position are disengaged in a folding range (32) from said guide means (26, 28).

2. Cover according to claim 1, **characterised in that** guide grooves (26, 28) located opposite each other and formed at two side walls (36) of said reception are associated to said four guide projections (22, 24).

3. Cover according to claim 1, **characterised in that** said planar member (12) is connected to a respective neighboring planar member (12) through the intermediary of a double-action hinge connection (16) on the one hand and preferably through a single-action hinge connection (14) on the other hand, and that two coaxially arranged guide projections (22) each are formed in the vicinity of said double-action hinge connection (16).

4. Cover according to any one of the preceding claims, **characterised in that** to the front planar member (12g) in the opening direction a stop (41) is associated which said planar member contacts following a dead travel during opening.

5. Cover according to claim 1, **characterised by** an additional support (40) in the folding range (32) whereby said short guide projections (24) of said foremost planar member (12g) in the opening direction are supported in the closing condition.

6. Cover according to claim 5, **characterised by** a mounting groove (39) opening into said guide groove (26, 28) in the range of said additional support (40) when viewed in the closing direction.

7. Cover according to any one of the preceding claims, **characterised in that** joint or hinge connections (14, 16) extend across the width of said planar members (12) .

8. Cover according to any one of the preceding claims, **characterised in that** said guide grooves (26, 28) present a shortened support surface in the folding range (32), so that said short guide projections (24) are not supported.

9. Cover according to claim 8, **characterised in that** each guide groove (26, 28) branches in the folding range (32), with a guide path (34) extending in the pivoting direction of said planar members (12) branching off, along which said short guide projections (24) are guided during the pivoting motion.

10. Cover according to any one of the preceding claims, **characterised in that** one planar member includes locking means (45) for immobilising said cover (2) at least in the opened position.

11. Cover according to any one of the preceding claims, **characterised in that** the rearmost planar member (12i) in the opening direction is provided with a grip part (42) which may be pivoted out of the plane of said cover (2) in the opened position.

12. Cover according to any one of the preceding claims, **characterised in that** one planar member (12i) carries at its major surface facing a keeping space (8) a support member (64) whereby an object received in the receptacle, for example a beverage can (66), may be encompassed in portions thereof.

13. Interior accessory part (6; 46) of a vehicle for receiving and/or keeping objects, including a casing or body (48) containing a keeping space (8) and an opening (4; 54) for said keeping space (8), **characterised by** a cover (2; 56) in accordance with one or several of the preceding claims for closing or releasing said opening (4; 54).

## Revendications

1. Couvercle pour réceptacle muni d'une multitude d'éléments en surface (12) reliés entre eux de manière articulée et glissant dans un guide (26, 28), qui peuvent être ramenés d'une position fermée à une position ouverte, dans lequel le guide (26, 28) est constitué de sorte que les éléments en surface (12) sont disposés les uns par rapport aux autres en position d'ouverture sensiblement en zigzag, **caractérisé en ce que** les éléments en surface (12) ont au moins deux avancées de guidage (22) définissant un axe de pivotement, cet axe étant déplacé contre un assemblage articulé (16) par l'élément de surface (12) voisin et **en ce que** deux autres avancées de guidage (24), disposées l'une par rapport à l'autre de manière coaxiale, présentent une longueur plus faible que les deux autres avancées de guidage (22) et arrivent en position d'ouverture dans une zone pliée (32) en engrenage extérieur avec le guidage (26, 28).

2. Couvercle selon la revendication 1,
**caractérisé en ce que** les rainures de guidage (26, 28), qui sont formées sur deux parois latérales (36) du dépôt, sont disposées en se faisant face l'une à l'autre par rapport aux quatre avancées de guidage (22, 24).

3. Couvercle selon la revendication 1, **caractérisé en ce que** l'élément de surface (12) est connecté, d'une part, par un assemblage à charnière à double effet (16) et, d'autre part, de préférence, par un assemblage à charnière à effet simple (14) avec, selon le cas, un élément de surface voisin (12), et **en ce que**, selon le cas, deux avancées de guidage (22), disposées de manière coaxiale l'une par rapport à l'autre, sont formées à proximité de l'assemblage à charnière à double effet (16).

4. Couvercle selon l'une quelconque des revendications précédentes, **caractérisé en ce qu'**il est attribuée une butée (41) à l'élément de surface (12g) situé en avant vers l'ouverture, cette butée le coinçant lors de l'ouverture après une course à vide.

5. Couvercle selon la revendication 1, **caractérisé par** une surface d'appui supplémentaire (40) dans la zone pliée (32), par laquelle les courtes avancées de guidage (24) de l'élément en surface le plus en avant en direction de l'ouverture (12g) sont gardées à l'état fermé.

6. Couvercle selon la revendication 5, **caractérisé par** une rainure de montage (39) qui débouche, vue dans le sens de la fermeture, dans la zone de l'appui supplémentaire (40) dans la rainure de guidage (26, 28).

7. Couvercle selon l'une quelconque des revendications précédentes, **caractérisé en ce que** les assemblages mobiles ou à charnière (14, 16) s'étendent sur la largeur des éléments de surface (12).

8. Couvercle selon l'une quelconque des revendications précédentes, **caractérisé en ce que** les rainures de guidage (26, 28) ont dans la zone pliée (32) une surface d'appui raccourcie, de sorte que les avancées de guidage plus courtes (24) ne sont pas soutenues.

9. Couvercle selon la revendication 8, **caractérisé en ce que** chaque rainure de guidage (26, 28) de la zone pliée (32) bifurque de sorte qu'un rail de guidage (34) s'embranche dans la direction de pivotement en s'étendant sur les éléments de surface (12), les avancées de guidage plus courtes (24) le long du rail étant guidées lors du mouvement pivotant.

10. Couvercle selon l'une quelconque des revendications précédentes, **caractérisé en ce qu'**il a un moyen de blocage (45) de l'élément de surface pour l'arrêter (2) au moins en position d'ouverture.

11. Couvercle selon l'une quelconque des revendications précédentes, **caractérisé en ce que** l'élément de surface le plus en arrière en direction de l'ouverture (12i) est prévu, en une seule pièce, munie d'une partie à poignée (42) qui, en position d'ouverture, peut pivoter en sortant du plan du couvercle (2).

12. Couvercle selon l'une quelconque des revendications précédentes, **caractérisé en ce qu'**un élément de surface (12i) porte en sa grande face tournée vers le magasin (8) un élément de support (64), permettant de recueillir pas à pas un objet reçu dans le récipient, par exemple une canette de bière (66).

13. Partie d'équipement intérieur (6 ; 46) d'un véhicule pour la réception et/ou le stockage d'objets, avec une caisse ou un bâti (48) contenant un magasin (8) et une ouverture (4 ; 54) pour le magasin (8), **caractérisée par** un couvercle (2 ; 56) selon une ou plusieurs des revendications précédentes pour la fermeture ou la libération de l'ouverture (4 ; 54).
